# EUROPEAN PATENT APPLICATION

(11) **EP 3 385 494 A1**
(43) Date of publication of application: **10.10.2018**
(21) Application number: 17164922.1
(22) Date of filing: 05.04.2017
(51) Int. Cl.: E21B 7/02, E21B 15/04, B25J 9/16

(54) **APPARATUS AND METHOD FOR CONTROLLING BOOM OF MINE VEHICLE**

(71) Applicant: Sandvik Mining and Construction Oy, 33330 Tampere (FI)
(72) Inventor: PUURA, Mr. Jussi, 33330 Tampere (FI); SAARELA, Mr. Markus, 33330 Tampere (FI); LAUNIS, Ms. Sirpa, 33330 Tampere (FI); KIVELÄ, Mr. Tuomo, 33720 Tampere (FI)
(74) Representative: Sandvik

(57) **Abstract**

The invention relates to an apparatus for controlling one or more booms of a mine vehicle. The invention further relates to a mine vehicle, method and computer program product. The apparatus comprises a control unit (CU) provided with a boom controller (BC) for controlling movements of the boom (3), and a collision server (CS) for executing collision avoidance measures simultaneously during the control of the boom. The collision server is provided with 3D geometry data on at least one part of the boom and one other physical object and is configured to calculate shortest distance between them. The control unit controls the boom so that the 3D geometry data will not collide.

## Description

### Background of the invention

The invention relates to an apparatus for controlling booms of a mine vehicle.

The invention further relates to a mine vehicle, a method of controlling booms of a mine vehicle and a computer program product.

The field of the invention is defined more specifically in the preambles of the independent claims.

In mines and at other work sites different type of mine vehicles are used. The mine vehicles are provided with one or more booms and mine working tools at distal ends of the booms. The mine vehicle may be a rock drilling rig, a bolting or reinforcing vehicle, a measuring vehicle or any other mine vehicle, which is designed to execute a mine work task at the work site by means of the boom and the mine working tool. Typically the mine work tool needs to be positioned to exact positions, which may be determined in a mine or drilling plan, for example. The boom comprises one or more boom parts and joints between them. Controlling of the boom in confined mine spaces is demanding and collisions between the boom and obstacles may exist. Therefore, collision avoidance systems are needed for the mine vehicles. However, the present systems have shown to contain some disadvantages.

### Brief description of the invention

An object of the invention is to provide a novel and improved apparatus and method for controlling one or more booms of a mine vehicle. The invention further relates to a mine vehicle and a computer program product.

The apparatus according to the invention is characterized by the characterizing features of a first independent apparatus claim.

The method according to the invention is characterized by the charactering features and steps of an independent method claim.

Further, characterizing features of the mine vehicle and the computer program product are disclosed in additional independent apparatus claims.

An idea of the disclosed solution is that movements of one or more booms of a mine vehicle are controlled by means of one or more control units. The control unit is provided with one or more boom controllers for generating control signals for controlling boom actuators to move joints of the boom. The control unit is also configured to execute collision avoidance process for preventing the boom to collide. Measures of the collision avoidance are executed simultaneously during the control process, whereby no preplanned movement paths are utilized. Instead, joint values of the boom may be defined continuously as the controlling of the boom proceeds.

The collision avoidance measures are executed in one or more collision server of the at least one control unit. The collision server is configured to receive 3D geometry data on at least two monitored physical objects, namely a first object and a second object. At least the first object is a boom part of the controlled boom and the second object may be another boom part of any other monitored physical object. The collision server is provided with data on current poses of the objects in the 3D coordinate system, whereby the collision server may calculate current poses of the respective 3D geometry data. Thereby, the collision server may calculate relative poses of the 3D geometry data of the monitored objects and is also able to determine the shortest distance between them. The calculated data on the shortest distance is utilized in the boom controller for calculating therein joint values by means of which a tool at the distal end of the boom can be moved towards a target pose without the selected first object of the boom colliding with the second physical object. On the basis of the collision examination the boom may be kept away from the obstacles, and still, it may be moved effectively towards the target pose.

An advantage of the disclosed solution is that the collision server may execute the on-line collision examination during the controlling of the boom, whereby no precalculated routes or movement paths are needed. In other words, the collision server may monitor the movement of the boom continuously and may execute collision examination immediately when a need occurs. When need be, the collision server may compute collision data and create a collision free path to move around the detected object.

The disclosed solution is applicable also for complicated structures and geometric shapes because in the disclosed solution the 3D geometric data of the physical objects are applied. Then exact points of collision of complex physical objects may be determined. The collision examination is also accurate because 3D data of real shapes of the objects are used. The use of 3D geometry data makes the disclosed system to be suitable for harsh and dirty mine work sites.

Further, when the possible collision is detected, the positioning of the boom is not terminated, but instead, the positioning is continued with corrected joint values. A further additional advantage of the use of accurate 3D geometric models is that the apparatus may control the boom to pass the detected physical object at a relatively close distance whereby the positioning movement may remain as straight and effective as possible. Thanks to these features, productivity and operational reliability of the boom may be increased.

According to an embodiment, the 3D geometry data of the monitored two or more physical objects comprise point cloud data. Then each of the monitored physical objects comprise a plurality of points provided with position data. Electrical 3D design data, such as 3D CAD data, as well as 3D scanning data may be easily transformed to point clouds. Means and programs for processing and computing of the point clouds are available.

According to an embodiment, as an alternative to the point cloud data, the 3D geometry data of the monitored two or more physical objects may comprise a polygon mesh, for example. Then the shape of the physical object may be defined as a triangle mesh composed several triangles, and typically these polygons share edges to form a three-dimensional patchwork. The polygon mesh may alternatively comprise quadrilaterals. The polygon mesh may be transformed from a 3D design or modelling data, or may comprise scanned forms of a real 3D object. In addition to the mentioned polygon mesh, any other available 3D geometry data element may be utilized in the collision examination process disclosed in this patent application.

According to an embodiment, the apparatus may comprise one single control unit provided with one or more boom controllers and one or more collision servers. Alternatively, the one or more boom controllers may be located separately to one or more control units comprising the one or more collision servers. In other words, the boom controller and the collision server may both be located in the same control unit, or alternatively in different control units. This way the actual boom control process and the collision process may be integrated or decentralized. Between the separate units are data transmission means.

According to an embodiment, the collision server is configured to examine the 3D geometry data as static elements. Thereby shape of the physical object and correspondingly the shape of the 3D geometry data do not change during the collision examination. In practice the collision examination expects the tool at the distal end of the boom to be in an inoperative state. This simplification facilitates and quickens the examination process.

According to an embodiment, the collision server is configured to examine and prevent possible self-collisions between two or more boom parts of one single boom. Then, 3D geometry data, such as point cloud data, and pose data on critical, or all boom parts are input to the collision server, which may examine the input data in real-time and may generate collision avoidance data for the boom controller. The boom controller takes care that the joints of the boom are controlled so that the monitored boom parts do not collide. An advantage of this embodiment is that the boom may be driven into complex positions without a risk to collision. This way reach of the boom may be fully utilized.

According to an embodiment, the collision server is configured to examine and prevent possible collisions between two or more separate booms. Thus, this embodiment only relates to mine vehicles comprising several booms. Typically a rock drilling rig used for tunneling may comprise 2 - 3 drilling booms and one or more booms with a man cage or bolting device, for example. By means of the collision avoidance measures the booms may operate effectively and safely even in narrow tunnels. In this embodiment the collision server is provided with 3D geometry data, such as point cloud data, and pose data on one or more boom parts of two or more separate booms. Thereby the collision server is configured to execute collision avoidance measures between at least two separate booms. The controlled boom may then move around the other boom and give way for it and to thereby avoid the collision.

According to an embodiment, the collision server is configured to examine and prevent possible collisions between a boom and a carrier of the mine vehicle. The boom may collide with a front portion of the carrier or with components protruding from the carrier if no collision prevention is used. Therefore, the collision server is provided with 3D geometry data, such as point cloud data, and pose data on the carrier, specific part of the carrier or one or more component mounted on the carrier. The specific part may be a support leg of the carrier, for example. Thereby, the collision server may execute collision avoidance process and provide the boom controller with collision data so that the joints of boom will be controlled so that the boom will move around the obstacle.

According to an embodiment, the collision server is configured to examine and prevent possible collisions between a boom and one or more environment elements or objects. The environment object may be a wall or surface limiting the working site where the mine vehicle is operating. Thus, the environment object may be a wall, ceiling, floor or face of a tunnel. Alternatively, the environment object may be a fixed structure arranged at the work site. Further, at a reach of the boom may be movable objects such as other mine vehicles or workers, which may also be taken care as environment objects in the collision avoidance process. The collision server is provided with 3D geometry data, such point cloud data, and pose data on one or more environment objects. Thereby the collision server is configured to execute collision avoidance measures between the environment object and the at least one boom part. The control unit may determine distances between the boom and the physical objects surrounding the mine vehicle and determine where they are in order to be classified as environment objects locating at the reach of the boom, or as objects of no importance.

According to an embodiment, the collision server may implement simultaneously several of the previously discussed collision examinations. Thereby it may examine simultaneously two or more of the following: the self-collision, collision with other booms, collision with carrier and fixed components on board, and collision with surrounding fixed structures or moving physical obstacles. However, the apparatus may prioritize and change the utilized examination principle during the boom control in order to save calculating capacity. The solution is advantageous when there are several possible risks of collision with the physical objects and when the boom operates in a limited space.

According to an embodiment, the collision server is provided with measuring data on position and orientation of the controlled boom. Measuring devices may be arranged on the boom, or alternatively, the boom and its parts may be measured by measuring devices arranged on the carrier. Further, the measuring may be executed by means of external measuring devices. The external measuring devices and the on-board measuring devices arranged on the carrier may be scanning devices, such as laser scanners, for example. The generated measuring data is input to the collision server together with data on configuration of the monitored boom. Based on the input data the collision server may calculate the current pose of the boom and its boom parts. The configuration of the monitored boom may comprise at least data on dimensions of the boom parts, number of the boom parts, number of joints and their movement directions. In other words, the collision server is provided with kinematic data on the boom.

According to an embodiment, the 3D geometry data, such as the point cloud data, of the physical object is based on scanning data. The scanning data is produced by means of one or more scanning devices, which may be arranged on-board or may be external to the mine vehicle. The scanning device may be a laser scanner or may be based on time-of-flight measuring principles, for example. The produced scanning data is input to the collision server which utilizes the input data as the 3D geometry data representing the physical object. The collision server may transform the scanning data into point cloud data. An advantage of this embodiment is that the scanned data represents the actual configuration and shapes of the physical object. The scanned 3D geometry data of the physical object is accurate which is very important for achieving accurate collision examination. A further advantage is that the 3D geometry data can be made for any existing physical object and that the scanning process is fast and may be executed easily. Furthermore, the 3D geometry data of the physical object may be easily updated by means of the scanning process.

According to an embodiment, the 3D geometry data, such as the point cloud data, of the physical object is based on an electrical design data. Then the 3D geometry data may be generated from a computer aided design model of the respective physical object. The design model may be a 3D CAD -model, for example. An advantage of this embodiment is that design models of machine components are already available since nowadays design work is made computer aided. The 3D geometry data transformed from the design model of the physical object is accurate which is very important for achieving accurate collision examination results.

According to an embodiment, the collision avoidance measures of the collision server are divided into two stages in order to facilitate the above disclosed real-time collision examination and to ensure that reasonable computing capacity of the collision server is enough. The collision avoidance may be divided into a harsh first stage and a more accurate second stage. At first, the collision server generates virtual 3D bounding boxes around the 3D geometry data of the monitored objects. The bounding boxes surround the 3D geometry data with a predetermined tolerance relative to the outermost points of the point cloud or other 3D geometry data. Thus, the bounding box forms a slightly oversized space inside which the point cloud or other 3d geometry data is located. In the first stage, the collision server monitors only collisions of the simple bounding boxes. The accurate and more complicated second stage is executed only when collision between the bounding boxes is detected. Because of the tolerances of the bounding boxes, no actual collision of the objects occurs. When the second stage is initiated, the collision server selects for a further collision examination a limited amount of points or elements of the colliding 3D geometry data. The points to be observed are selected at the position or nearby where the collision of the bounding boxes is detected. Thereafter, the collision server may calculate the shortest distance between the selected points. The boom controller is provided with the data on the detected shortest distance and controls the boom to avoid the selected points or elements to collide during the boom control process. Since the accurate collision examination is limited only to the selected points or elements, then the computing process is faster and requires no extensive processing capacity.

According to an embodiment, the mine vehicle comprises several booms and each of the booms are controlled by means of dedicated boom controllers. Thus, the control unit comprises several boom controllers. However, one single collision server may serve all the dedicated boom controllers.

According to an embodiment, the mine vehicle is a rock drilling rig or bolting rig. Then the target poses of the mine work tools are defined in advance in drilling plans such as in drilling patterns and reinforcing plans. The pre-designed plans may be input to the control unit and may be taken into consideration when controlling the boom to position a rock drilling tool or a reinforcing bolt at the determined positions of drill holes. The drilling pattern comprises a start point and an end point or direction of the drill hole.

According to an embodiment, the solution decides joint trajectories for a redundant boom of a mine vehicle. Then the boom has more than six degrees of freedom (DOF) which means that is has at least one extra DOF. Thanks to the extra DOF, the boom has additional joint parameters and freedom in kinematics for obstacle avoidance. In practice the collision server may determine possible collision when a specific joint of the boom is to be moved during the positioning of the boom and then the boom controller controls one or more other joints instead of the joint being in risk to cause collision, and still, the boom will be controlled in accordance with the operational need. In other words, the boom structure provides the boom control with flexibility to give in the conventional linear control principle temporarily and to utilize the additional degrees of freedom when passing the obstacles safely.

According to an embodiment, the boom of the mine vehicle is redundant whereby the boom has more than six degrees of freedom (DOF). When the boom is redundant, boom parts of the boom may be moved while a tool at a distal end of the boom may be hold in a fixed position and orientation. In non-redundant booms trajectory of the tool changes when the boom is moved towards an end pose. An initial orientation of the tool is detected and the boom controller is configured to control joints of the boom so that the initial tool orientation is not changed during the movement of the boom. Then trajectory of the tool is maintained during the movement towards the target pose. This way, direction of the tool is not continuously changed during the positioning movement but instead the tool may be directed to a desired direction. An advantage of this embodiment is that the positioning of the tool inside the confined spaces is easier and supervising of the positioning is facilitated.

According to an embodiment, the control unit is configured to control the boom automatically towards the input target position. Thus, the control unit execute fully automatic the positioning movements and the collision avoidance measures.

According to an embodiment, the control unit executes the collision examination automatically but the actual boom control is manual or semi-manual. Then the operator is informed of the possible collision and is provided with control guidance generated by the control unit in order to avoid the collision. The control unit may display the guidance on a display device. It may also be possible to switch the manual control temporarily into automatic control and to allow the control unit to solve the situation. Thus, the disclosed apparatus may be also be utilized in manual and computer assisted controlling of the boom. An advantage is that the work of an operator becomes easier and less demanding.

According to an embodiment, the collision prevention system may utilize artificial potential fields when planning a collision free path towards the target pose. Then detected physical obstacles in the reach of the controlled boom are considered as positively charged elements, as well as the controlled boom and the current pose. The target pose is considered as a negatively charged element. The positively charged obstacles repel each other and generate repulsive force. The negatively charged target pose attracts the positively charged boom because of their opposite charges. The boom controller controls the boom towards the target pose and avoids the other positively charged elements. Thereby a collision free path is generated.

According to an embodiment, the apparatus utilizes the above disclosed artificial potential fields and when the control unit detects that the target pose cannot be reached because of the detected obstacles, then substitutive positioning is implemented. In the substitutive positioning the control unit may position the tool as close as possible to the target pose by taking into account the traction force of the target pose and repulsive forces of the obstacles. Then, the final end pose may deviate from the planned pose but is as close to the planned pose as possible. At the final pose there exists equilibrium between the traction force and the repulsive forces.

According to an embodiment, the control unit is configured to estimate ability to reach the target pose by the boom prior to initiate the positioning, and is configured to indicate result of the estimation. The control unit may be configured to automatically detect if the target pose is reachable and may indicate to the operator if not. Further, the control unit may suggest corrective measures for the operator or may implement them automatically. An advantage of this embodiment is that corrective measures may be executed beforehand to avoid the problems in the actual operation. Some possible corrective features may be as disclosed in the following four paragraphs.

When the control unit is configured to control moving of several booms, the control unit may be configured to substitute an initially controlled boom with another boom in response to indication that the initial boom is unable to reach the target pose.

Further, when the control unit is configured to control moving of several booms, then the control unit may be configured to move one or more booms out of the way of an initially controlled boom in response to detection of possible collision between the initial boom and the other booms when moving the initial boom towards the target pose. The corrective measure may also include re-dividing the work tasks between several booms.

When the mine vehicle is rock drilling rig comprising one or more drilling booms, then the control unit may be provided with a drilling pattern defining start and end positions of the drill holes to be drilled. If the collision avoidance detects that the boom cannot be positioned to a start point of a drill hole, because of a wall surface of a tunnel, for example, then the control unit may use the end point of the drill hole as a target pose and may position a drilling tool of the drilling boom as close as possible to a rock surface. This way direction of the drill hole is not as designed but at least end of the drilled hole is in accordance with the drilling plan. An alternative solution is to amend the drilling pattern after being noted that the initial plan comprises drill holes which may not be reached. The control unit may automatically reposition the problematic drill holes of the drilling pattern in order to place them into reachable start points and directing them so that the original end points are met when being drilled.

A further possible embodiment for rock drilling is to simulate drilling of the entire drilling pattern before the actual drilling phase and to examine how well the drilling pattern may be drilled, and to note the possible collisions. The simulation my also provide information for determining if the drill holes of the drilling pattern are divided correctly between several drilling booms. Thus, the simulation may indicate possible defects in the drilling pattern. The drilling pattern may be corrected on the basis of the simulation and may be executed automatically without interruptions. The control unit may be provided with a simulation program or algorithm for providing the disclosed simulation feature.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling rig provided with several drilling booms and means for determining poses of the booms and the surroundings,
Figure 2 is a schematic diagram showing possible collision examination situations and physical objects to collide with,
Figure 3 is a schematic diagram showing 3D geometry data,
Figure 4 is a schematic diagram showing a possible collision avoidance architecture,
Figure 5 is a schematic view showing conventional linear positioning movement from a start pose to a target pose and Figure 6 shows that the positioning is stopped in the conventional system when an obstacle is detected on the movement path,
Figure 7 is a schematic view showing that the boom may turn around a detected obstacle and continue positioning,
Figure 8 is a schematic view showing a principle of an artificial potential field method,
Figure 9 is a schematic view showing that when the boom cannot be positioned to the target pose, then a substitute pose may be determined,
Figure 10 is schematic view showing two boom parts and Figure 11 shows the boom parts as point clouds being surrounded by virtual bounding boxes,
Figure 12 is a schematic view showing that the boom parts of Figures 10 and 11 are tilted so that the virtual bounding boxes collide, and
Figure 13 is a schematic view showing the closest distance between two point clouds.

For the sake of clarity, the figures show some embodiments of the disclosed solution in a simplified manner. In the figures, like reference numerals identify like elements.

### Detailed description of some embodiments

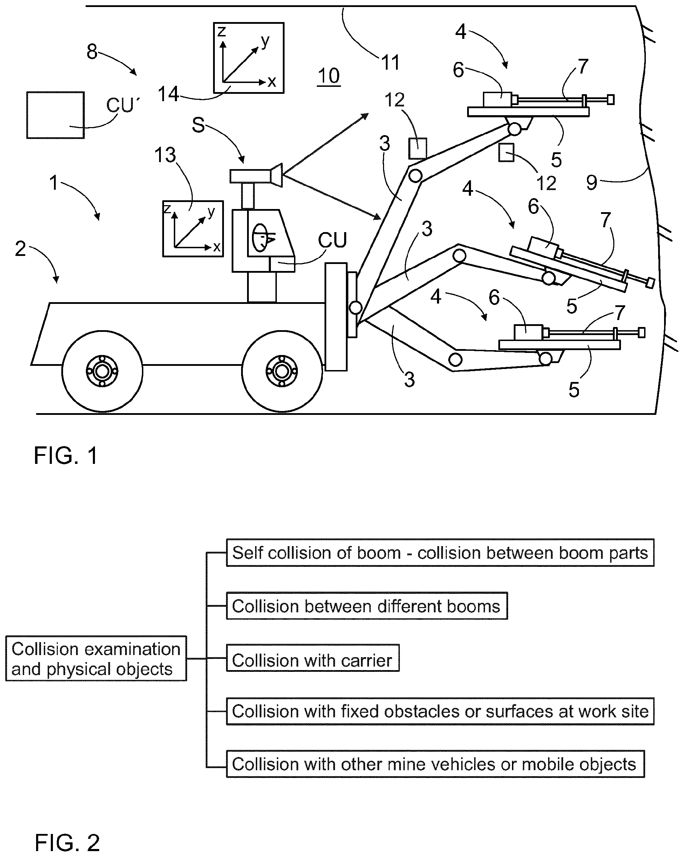

Figure 1 shows a rock drilling rig 1 as an example of a mine vehicle. Also rock bolting rigs, charging rigs, measuring vehicles are mine vehicles comprising one or more booms. The disclosed method and solution may be applied in all type mine vehicles comprising booms.

The rock drilling rig 1 may comprise a movable carrier 2 and one or more booms 3 connected to the carrier 2. At a distal end portion of the boom 3 may be a drilling unit 4. The drilling unit 4 may comprise a feed beam 5 and a rock drilling machine 6 supported on it. The rock drilling machine 6 may comprise a shank at a front end of the rock drilling machine 6 for connecting a tool 7.

In Figure 1 the rock drilling rig 1 is operating in an underground mine space 8, which may be a tunnel, storage hall or corridor, for example. The mine space 8 may comprise a face surface 9, wall surfaces 10 and a roof surface 11.

The rock drilling rig 1 may be provided with one or more scanning devices S for measuring current positions and directions of the booms 3. The scanning device S may also determine 3D shapes of the booms 3. The scanning device S may detect the surrounding surfaces and other obstacles around the rock drilling rig 1 and produce scanning data for the collision examination. The scanning device S may comprise a laser scanner. As an alternative to the scanning, the booms may be provided with measuring devices or sensors 12 for measuring positions and directions of the booms. The sensing data of the scanner S and the sensors 12 are transmitted to a control unit CU, which may determine current poses of the booms and may execute collision examination procedures. The poses may be defined in a 3D machine coordinate system 13 of the rock drilling rig 1 and may be transformed into a 3D mine coordinate system 14.

Figure 1 further discloses that the mine vehicle 1 may communicate with one or more external control units CU', which may be part of a mine control system or they may be individual computers, servers or terminal devices. This way it may be possible to execute the collision execution or other disclosed processes or computations external to the mine vehicle.

Figure 2 discloses different type of collision examinations which may all be included during the control of the boom.

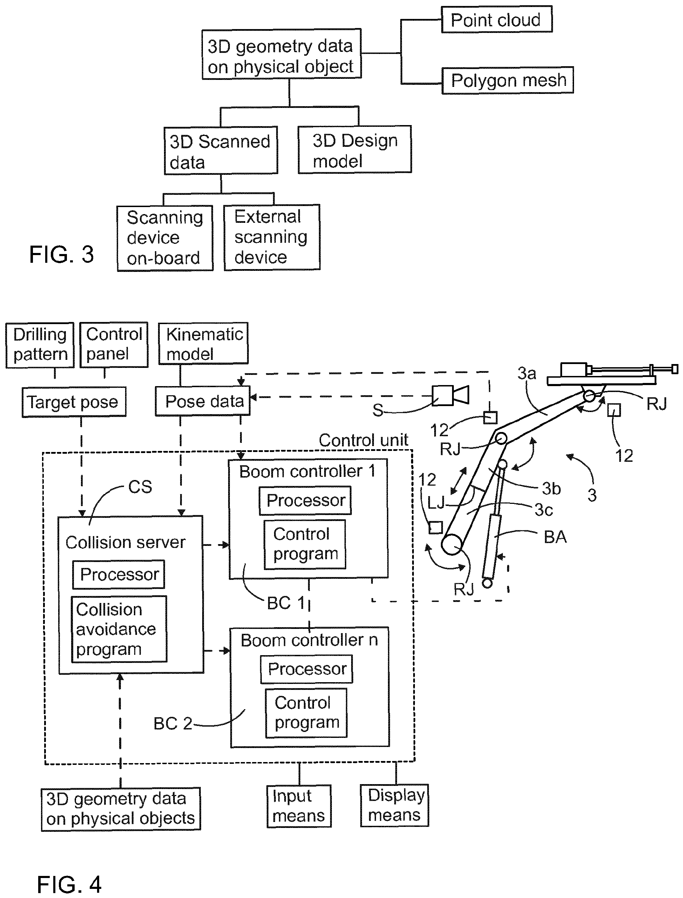

Figure 3 discloses that the 3D geometry data used in the collision examination may be 3D point clouds or 3D polygon meshes. The 3D geometry data of the physical objects may be created by means of scanners or may be transformed from 3D design models.

Figure 4 discloses a collision avoidance architecture, which may comprise a control unit CU. The control unit CU may be provided with a collision server CS and one or more boom controllers BC1 to BCn depending on the number of booms 3 to be controlled. The collision server CS may serve all boom controllers BC and comprises a processor for executing a collision avoidance program. Target pose and current pose of the boom are input to the collision server CS as well as 3D geometry data on the boom and the other physical objects. The target pose may be input by means of a control panel or may be retrieved from a drilling pattern or corresponding pre-designed plan. The current pose data may be determined by means of a scanner S or sensors 12. The boom 3 may comprise several boom parts 3a - 3c and rotational joints RJ or linear joints LJ between them. The sensors 12 may be arranged in connection with the joints, for example. On the basis of the sensing data of the sensors 12 and kinematic model of the boom, current poses of the boom parts 3a - 3c may be determined. The collision server CS provides the boom controllers BC with collision avoidance data and dedicate boom controllers BC generate control signals for controlling boom actuators BA.

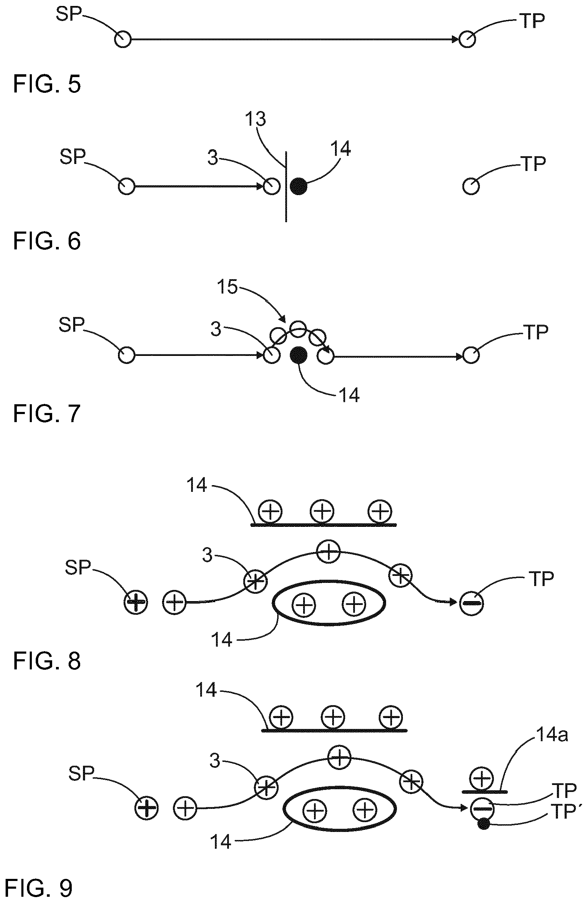

Figure 5 shows conventional linear positioning movement from a start pose SP to a target pose TP. In Figure 6 the positioning of the boom 3 is stopped at point 13 when an object 14 is detected on the movement path. In Figure 7 the boom is arranged to turn around 15 the detected obstacle 14 and the positioning is carried out continuously without any stoppage.

Figure 8 shows a basic principle of an artificial potential field method, wherein the boom 3, the start pose SP and the objects 14 are positively charged items and the target pose TP is a negatively charged item. Then the positively charged boom 3 avoids the positively charged objects 14 and approaches the negatively charged target pose TP. In Figure 9 the target pose TP is close to an additional object 14a preventing the positioning at the target pose TP. Then the disclosed system may generate a substitute pose TP' wherein propulsive forces and attractive forces are in balance.

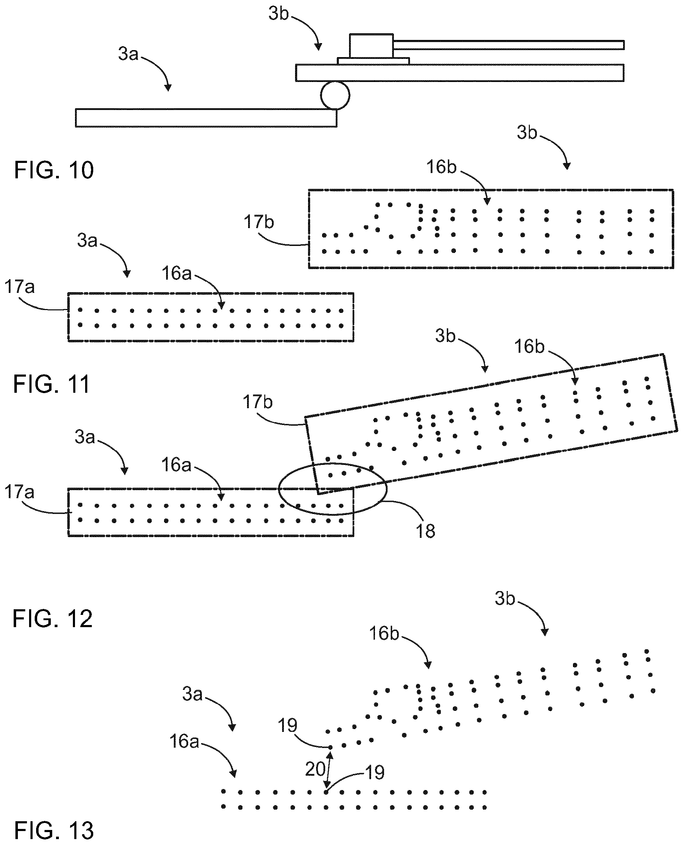

Figure 10 discloses two boom parts 3a, 3b and Figure 11 shows the boom parts as point clouds 16a, 16b comprising several points. Around the point clouds 16a, 16b are virtual bounding boxes 17a, 17b, which form imaginary boundary surfaces at a distance from outermost points of the point clouds. In Figure 12 the boom part 3b is moved so that the bounding boxes 17a, 17b collide. Then the disclosed collision avoidance system may select a limited amount of points 18 to be examined more closely. When the bounding boxes do not collide, then there is no need for accurate collision avoidance.

Figure 13 discloses two point clouds 16a, 16b and points 19 being closest to each other. Then the closest distance between the point clouds 16a, 16b representing boom parts 3a, 3b is indicated by an arrow 20.

In Figures 11 - 13 the 3D point clouds 3a, 3b are shown in 2D for improving clarity. The same applies also for the 3D bounding boxes 16a, 16b shown in Figures 11 and 12.

The drawings and the related description are only intended to illustrate the idea of the invention. In its details, the invention may vary within the scope of the claims.

## Claims

1. An apparatus for controlling at least one boom (3) of a mine vehicle, wherein the boom (3) comprises at least two boom parts (3a - 3c) connected to each other by means of at least one joint (RJ, LJ), and boom actuators (BA) for moving the boom (3);
the apparatus comprises at least one control unit (CU); and
the control unit (CU) comprises at least one boom controller (BC) provided with at least one processor and being configured to generate control signals for boom actuators (BA) for moving the boom (3) from a detected start pose (SP) to an input target pose (TP), wherein the start pose (SP) and the target pose (TP) both comprise position and orientation data in a 3D coordinate system (13, 14);
**characterized in that**
the control unit (CU) further comprises at least one collision server (CS) provided with at least one processor and being configured to execute collision avoidance measures simultaneously during the control of the boom (3);
the collision server (CS) is configured to receive 3D geometry data on at least two monitored physical objects, a first object and a second object, wherein at least the first object is a boom part (3a - 3c) of the boom (3);
the collision server (CS) is provided with data on current poses of the first object and the second object in the 3D coordinate system and is configured to determine current poses of the respective first 3D geometry data and the second 3D geometry data;
the collision server (CS) is configured to calculate relative poses of the first 3D geometry data and the second 3D geometry data;
the collision server (CS) is further configured to calculate the shortest distance (20) between the first and second 3D geometry data; and
the boom controller (BC) of the control unit (CU) is configured to control the boom (3) towards the target pose (TP) and to simultaneously avoid the monitored 3D geometry data to collide with each other in response to the detected shortest distance (20).

2. The apparatus as claimed in claim 1, **characterized in that**
the collision server (CS) is provided with 3D geometry data and pose data on at least two different boom parts (3a - 3c) of one single boom (3), whereby the collision server (CS) is configured to execute collision avoidance measures between the at least two boom parts (3a - 3c) for avoiding self-collision of the boom (3).

3. The apparatus as claimed in claim 1 or 2, **char- acterized** in that
the collision server (CS) is provided with 3D geometry data and pose data on at least two boom parts (3a - 3c) of at least two separate booms (3), whereby the collision server (CS) is configured to execute collision avoidance measures between at least two separate booms (3).

4. The apparatus as claimed in any one of the preceding claims 1 - 3, **characterized in that**
the collision server (CS) is provided with 3D geometry data and pose data on at least one component of a carrier (2) of the mine vehicle in addition to 3D geometry data and pose data on at least one boom part (3a - 3c) of at least one boom (3), whereby the collision server (CS) is configured to execute collision avoidance measures between the carrier (2) and the at least one boom part (3a - 3c).

5. The apparatus as claimed in any one of the preceding claims 1 - 4, **characterized in that**
the collision server (CS) is provided with 3D geometry data and pose data on at least one environment physical object at a reach of the monitored boom in addition to 3D geometry data and pose data on at least one boom part of at least one boom, whereby the collision server (CS) is configured to execute collision avoidance measures between the environment object and the at least one boom part.

6. The apparatus as claimed in any one of the preceding claims 1 - 5, **characterized in that**
the collision server (CS) is configured to calculate the current pose of the at least one boom part (3a - 3c) of the boom (3) in response to input measuring data of at least one measuring device (12) and data on configuration of the controlled boom (3).

7. The apparatus as claimed in any one of the preceding claims 1 - 6, **characterized in that**
the collision server (CS) is provided with 3D scanning data produced by means of at least one scanning device (S); and
the collision server (CS) is configured to utilize the scanning data as the 3D geometry data of at least one of the physical objects.

8. The apparatus as claimed in any one of the preceding claims 1 - 6, **characterized in that**
at least one 3D geometry data input to the collision server (CS) is generated on the basis of a computer aided design model of the respective physical object.

9. The apparatus as claimed in any one of the preceding claims 1 - 8, **characterized in that**
the execution of the collision avoidance measures of the collision server (CS) comprises at least a first stage and a second stage;
the collision server (CS) is configured to generate virtual 3D bounding boxes (17a, 17b) around the point clouds of the monitored objects, whereby the bounding boxes surround the point clouds with a predetermined tolerance relative to the outermost points of the point clouds;
the collision server (CS) is configured to monitor collision of the bounding boxes (17a, 17b) in the first stage and is configured to execute the second stage only in response to detection of collision between the bounding boxes;
the execution of the second stage in the collision server (CS) is configured to select for a further collision examination a limited amount of points of the first and second point clouds at the position where the collision of the bounding boxes is detected, and is further configured to calculate the shortest distance (20) only between the selected points; and
the boom controller (BC) of the control unit (CU) is configured to control the boom (3) towards the target pose (TP) and to simultaneously avoid the selected points to collide with each other in response to the detected shortest distance (20).

10. The apparatus as claimed in any one of the preceding claims 1 - 9, **characterized in that**
the control unit (CU) comprises at least two dedicated boom controllers (BC1 - BCn), each of which is configured to control dedicated booms (3); and
the control unit (CU) comprises one single collision server (CS), which is configured to generate collision avoidance data for several dedicated boom controllers (BC1 - BCn).

11. The apparatus as claimed in any one of the preceding claims 1 - 10, **characterized in that**
the boom controller (BC) is configured to control the boom (3) to maintain initial trajectory of a tool end of the boom during the movement towards the target pose (TP).

12. The apparatus as claimed in any one of the preceding claims 1 - 11, **characterized in that**
the control unit (CU) is configured to control the boom (3) automatically towards the input target position (TP).

13. The apparatus as claimed in any one of the preceding claims 1 - 12, **characterized in that**
the collision server (CS) is provided with an artificial potential field algorithm for indicating in the collision avoidance measures the one or more booms (3) and detected physical obstacles in the reach of the controlled boom (3) as positively charged elements and to indicate the target pose (TP) as a negatively charged element, whereby the positively charged obstacles repel each other by generating repulsive force, and whereby the negatively charged target pose (TP) attracts the positively charged boom (3) due to their opposite charges; and
the boom controller (BC) is configured to control the boom (3) towards the target pose (TP) by simultaneously dodging the other positively charged elements in response to the generated repulsive forces.

14. The apparatus as claimed in any one of the preceding claims 1 - 13, **characterized in that**
the control unit is configured to estimate ability to reach the target pose by the monitored boom prior to initiate the positioning, and is configured to indicate result of the estimation.

15. A mine vehicle comprising:
a movable carrier (2);
at least one boom (3) provided with at least two boom parts (3a, 3c) and several boom joints (RJ, LJ);
several boom actuators (BA) for moving the boom (3) relative to the carrier (2);
at least one mine work device (4) arranged at a distal end portion of the boom (3); and
at least one apparatus for controlling the position of the at least one boom (3) and the mine work device (4);
**characterized in that** the apparatus for controlling the at least one boom (3) is in accordance with any one of the previous claims 1 - 14.

16. The mine vehicle as claimed in claim 15, **char- acterized** in that
the mine vehicle is a rock drilling rig (1) provided with at least one drilling boom and the mine work device at a distal end portion of the drilling boom is a rock drilling machine (6); and
the apparatus for controlling the drilling boom is provided with drill hole data on several drill holes to be drilled, and the apparatus is configured to control the drilling boom and the rock drilling machine towards a selected drill hole, which is serving as the target pose (TP).

17. A method of controlling at least one boom of a mine vehicle, wherein the boom (3) comprises at least two boom parts (3a - 3c) connected to each other by means of at least one joint (RJ, LJ), and boom actuators (BA) for moving the boom (3) ;
the method comprising:
controlling moving of the at least one boom (3) by means of at least one control unit (CU) ;
determining the current position and orientation data of the boom (3) in a 3D coordinate system and utilizing the determined data as a start pose (SP) in the control unit (CU) ;
providing the control unit (Cu) with a target pose (TP) for the boom (3), wherein the target pose (TP) comprises position and orientation data in a 3D coordinate system; and
generating in at least one boom controller (BC) control signals for boom actuators (BA) for moving the boom (3) from the start pose (SP) towards the target pose (TP);
**characterized in that** the method further comprises:
executing in at least one collision server (CS) of the control unit (CU) collision avoidance measures simultaneously during the control of the boom (3);
providing the collision server (CS) with 3D geometric data on at least two monitored physical objects, a first object and a second object, wherein at least the first object is a boom part (3a - 3c) of the controlled boom (3);
providing the collision server (CS) with data on current poses of the physical objects and their 3D geometric data;
calculating in the collision server (CS) relative poses of the monitored 3D geometric data and calculating the shortest distance between the first and second 3D geometric data; and
providing the boom controller (BC) with the data on the determined shortest distance and controlling the boom towards the target pose (TP) by simultaneously avoiding the monitored 3D geometric data to collide with each other.

18. A computer program product,
**characterized in that**
the computer program product comprises program code means configured to execute the steps and procedures disclosed in the independent claims when being run on a computer or a data processing device.
